# EUROPEAN PATENT APPLICATION

(11) **EP 3 012 731 A1**
(43) Date of publication of application: **27.04.2016**
(21) Application number: 15188268.5
(22) Date of filing: 02.10.2015
(51) Int. Cl.: G06F 3/0488, G06F 21/32, G07C 9/00

(54) **SYSTEMS AND METHODS FOR GESTURE RECOGNITION**

(30) Priority: 07.10.2014 US 201414508457
(71) Applicant: Schneider Electric Buildings, LLC, Palatine, IL 60067-7399 (US)
(72) Inventor: MORLEY, Michael, Deefield, NH New Hampshire 03037 (US); HATCH, Ramona Eason, Andover, MA Massachusetts 01810 (US); WALTON, Daniel, Arlington, MA Massachusetts 02476 (US); MERAN, Adam, Allston, MA Massachusetts 02134 (US)
(74) Representative: Zerbi, Guido Maria

(57) **Abstract**

According to various aspects, a gesture recognition system is provided. The gesture recognition system includes a memory storing finger identification information identifying a plurality of fingers of a user and command information associating a command with a finger and action pair, at least one processor coupled to the memory, and a gesture recognition component executable by the at least one processor. The gesture recognition component is configured to receive gesture information from a touch screen including a fingerprint and action information, identify a finger of the plurality of fingers of the user based on the fingerprint and the finger identification information, identify an action performed based on the action information, match the action and the finger with the finger and action pair stored in the memory, and perform the command associated with the finger and action pair.

## Description

### BACKGROUND

### Technical Field

The technical field relates generally to gesture recognition for touch screen devices.

### Background Discussion

Touch screen devices are electronic devices with a touch screen user interface. Touch screen devices generally measure changes in capacitance near the surface of the screen to identify locations of human contact. The touch screen device generally performs an action responsive to detecting human contact at a particular location on the screen. For example, the touch screen device may close a window responsive to detecting human contact at the same location as a close window button. Conventional methods of detecting human contact, however, enable touch screen devices to identify the location of the point of contact on the touch screen.

### SUMMARY

According to one aspect, a gesture recognition system is provided. The gesture recognition system includes a memory storing finger identification information identifying a plurality of fingers of at least one user and command information associating a command with at least one finger and action pair, at least one processor coupled to the memory, and a gesture recognition component executable by the at least one processor. The gesture recognition component is configured to receive gesture information from a touch screen including at least one fingerprint and action information, identify at least one finger of the plurality of fingers of the at least one user based on the at least one fingerprint and the finger identification information, identify an action performed based on the action information, match the action and the at least one finger with the at least one finger and action pair stored in the memory, and perform the command associated with the at least one finger and action pair.

In some embodiments, the gesture recognition component is further configured to uniquely identify the at least one finger by uniquely identifying at least one of a right index finger, a right middle finger, a right ring finger, a right little finger, a left index finger, a left middle finger, a left ring finger, and a left little finger of the at least one user.

In one embodiment, the finger identification information includes a plurality of key features associated with each finger of the plurality of fingers. In this embodiment, the gesture recognition component may be further configured to extract key features from the at least one fingerprint and match the extracted key features to the stored key features associated with each finger of the plurality of fingers.

In some embodiments, the action includes at least one of a directional swipe action, a tap action, and a press and hold action. In one embodiment, the command includes at least one of scrolling right, scrolling left, scrolling down, scrolling up, zooming in, zooming out, and opening properties.

In one embodiment, the action information includes a location of one or more contact points on the touch screen and information related to movement of the at least one finger. In this embodiment, the memory may store action identification information identifying a plurality of actions and the gesture recognition component may also be further configured to identify the action performed at least in part by matching the location and the information related to movement with action identification information stored in the memory.

In one embodiment, the gesture processing component is further configured to present, via the touch screen, a display to the at least one user including a control panel having a plurality of control elements. In this embodiment, each control element of the plurality of control elements may be associated with at least two commands, each of the at least two commands being associated with a unique finger and action pair. The at least two commands may include, for example, a first command to change a state of the respective control element and a second command to save the state of the respective control element. The first command may be associated with an index finger and a tap action and the second command is associated with a middle finger and a tap action.

In one embodiment, the gesture processing component is further configured to present, via the touch screen, a display to the at least one user including a control panel associated with a building heating, ventilating, and air conditioning (HVAC) system having a plurality of control elements.

According to one aspect, a method of recognizing gestures is provided. The method includes storing, via a memory coupled to at least one processor, finger identification information identifying a plurality of fingers of at least one user and command information associating a command with at least one finger and action pair, receiving, by a gesture recognition component executable by the at least one processor, gesture information including at least one fingerprint and action information, identifying, by the gesture recognition component, at least one finger of the plurality of fingers of the at least one user based on the at least one fingerprint and the finger identification information, identifying, by the gesture recognition component, an action performed based on the action information, matching, by the gesture recognition component, the action and the at least one finger with the at least one finger and action pair stored in the memory, and performing, by the gesture recognition component, the command associated with the at least one finger and action pair.

In one embodiment, identifying the at least one finger includes identifying at least one of a right index finger, a right middle finger, and a right ring finger, and a right little finger of the at least one user.

In one embodiment, storing the finger identification information includes storing a plurality of key features associated with each finger of the plurality of fingers. In this embodiment, uniquely identifying the at least one finger may include extracting key features from the at least one fingerprint and matching the extracted key features to the stored key features associated with each finger of the plurality of fingers.

In one embodiment, receiving the action information includes receiving a location of one or more contact points on the touch screen and information related to movement of that at least one finger. In this embodiment, the method may further include storing action identification information identifying a plurality of actions and identifying the action performed may include matching the location and the information related to movement with the action identification information.

According to one aspect, a touch screen device is provided. The touch screen device includes a touch screen constructed to generate gesture information responsive to receiving input from at least one user, a memory storing finger identification information identifying a plurality of fingers of the at least one user and command information associating a command with at least one finger and action pair, at least one processor coupled to the memory and the touch screen, and a gesture recognition component executable by the at least one processor. The gesture recognition component is configured to receive the gesture information from the touch screen including at least one fingerprint and action information, identify at least one finger of the plurality of fingers of the at least one user based on the at least one fingerprint and the finger identification information, identify an action performed based on the action information, match the action and the at least one finger with the at least one finger and action pair stored in the memory, and perform the command associated with the at least one finger and action pair.

Still other aspects, embodiments, and advantages of these exemplary aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed subject matter. Particular references to examples and embodiments, such as "an embodiment," "another embodiment," "some embodiments," "other embodiments," "an alternate embodiment," "various embodiments," "one embodiment," "at least one embodiments," "this and other embodiments" or the like, are not necessarily mutually exclusive and are intended to indicate that a particular feature, structure, or characteristic described in connection with the embodiment or example and may be included in that embodiment or example and other embodiments or examples. The appearances of such terms herein are not necessarily all referring to the same embodiment or example.

Furthermore, in the event of inconsistent usages of terms between this document and documents incorporated herein by reference, the term usage in the incorporated references is supplementary to that of this document; for irreconcilable inconsistencies, the term usage in this document controls. In addition, the accompanying drawings are included to provide illustration and a further understanding of the various aspects and embodiments, and are incorporated in and constitute a part of this specification. The drawings, together with the remainder of the specification, serve to explain principles and operations of the described and claimed aspects and embodiments.

### BRIEF DESCRIPTION OF DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a block diagram of an example touch screen device according to certain embodiments;
FIG. 2 is a block diagram of an example gesture recognition system according to certain embodiments;
FIGS. 3A-3C are diagrams illustrating various commands determined based on user interactions according to certain embodiments;
FIG. 4 is a flow diagram of an example gesture recognition process according to certain embodiments;
FIG. 5 is a flow diagram of an example command identification and execution process according to certain embodiments; and
FIG. 6 is an example user interface with gesture recognition according to certain embodiments.

### DETAILED DESCRIPTION

Some embodiments disclosed herein include apparatus and processes for gesture recognition. According to various embodiments, a gesture recognition system is provided to recognize specific gestures performed by a user on a touch screen. The gesture recognition system receives gesture information from a touch screen and identifies the specific finger, or combination of fingers, employed to interact with the touch screen and the action performed on the touch screen. The gesture recognition system matches the specific combination of fingers employed to perform the action in addition to the action itself to a specific command. The gesture recognition system may execute the matched command and/or provide the matched command to another system or software application. The employment of finger and action combinations to perform a specific command advantageously increases the number of commands the user can perform with a single control element of a user interface. For example, four commands may be associated with a single button tap action by associating each of the four commands with a tap action performed by one of four fingers, respectively. The increase in command density available in a user interface thereby reduces the amount of screen realestate required to enable the user to perform a given number of commands.

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated references is supplementary to that of this document; for irreconcilable inconsistencies, the term usage in this document controls.

### Touch Screen Device

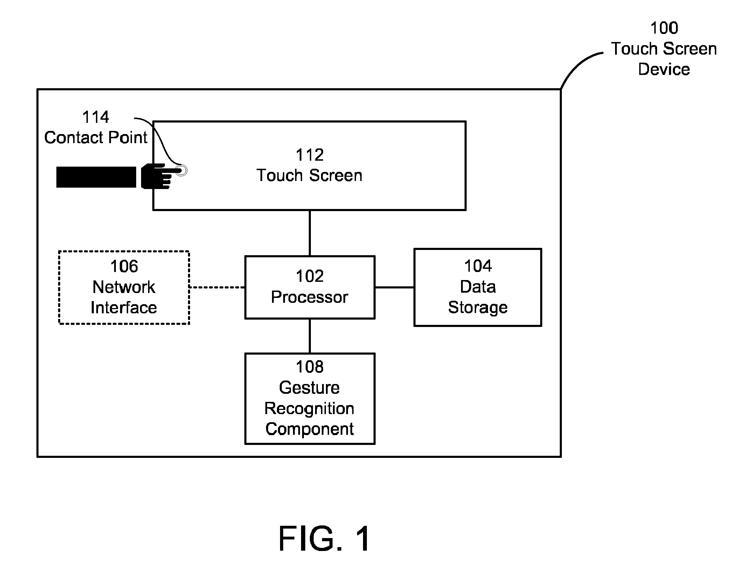

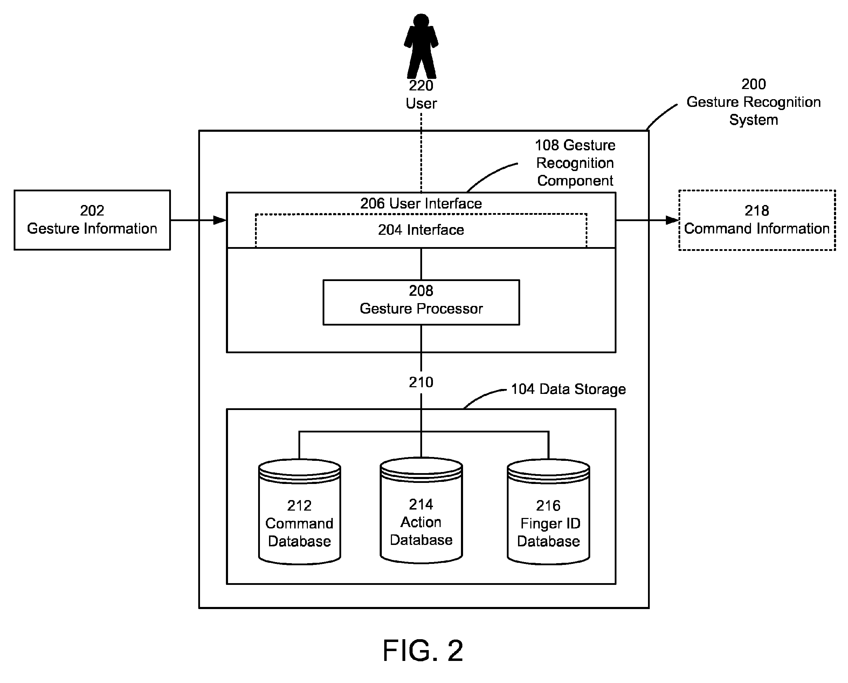

FIG. 1 illustrates a touch screen device 100 configured to implement a gesture recognition system, such as the gesture recognition system 200 described below with reference to FIG. 2. As shown in FIG. 1, the touch screen device 100 includes a processor 102, a gesture recognition component 108, data storage 104, a touch screen 112, and an optional network interface 106.

According to the embodiment illustrated in FIG. 1, the processor 102 is coupled to the data storage 104, the optional network interface 106, the gesture recognition component 108, and the touch screen 112. The processor 102 performs a series of instructions that result in manipulated data which are stored in and retrieved from the data storage 104. According to a variety of examples, the processor 102 is a commercially available processor such as a processor manufactured by Texas Instruments, Intel, AMD, Sun, IBM, Motorola, Freescale, and ARM Holdings. However, the processor 102 may be any type of processor, multiprocessor or controller, whether commercially available or specially manufactured.

In addition, in several embodiments the processor 102 is configured to execute a conventional operating system. In these examples, the operating system may provide platform services to application software, such as some examples of the gesture recognition component 108 which is discussed further below. These platform services may include inter-process and network communication, file system management and standard database manipulation. One or more of many operating systems may be used, and examples are not limited to any particular operating system or operating system characteristic.

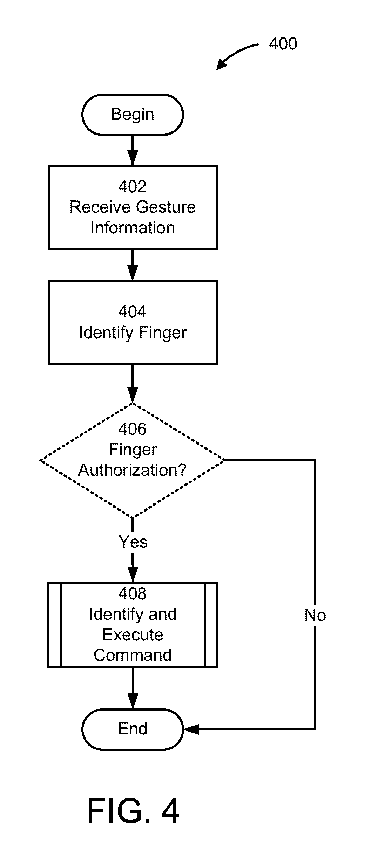

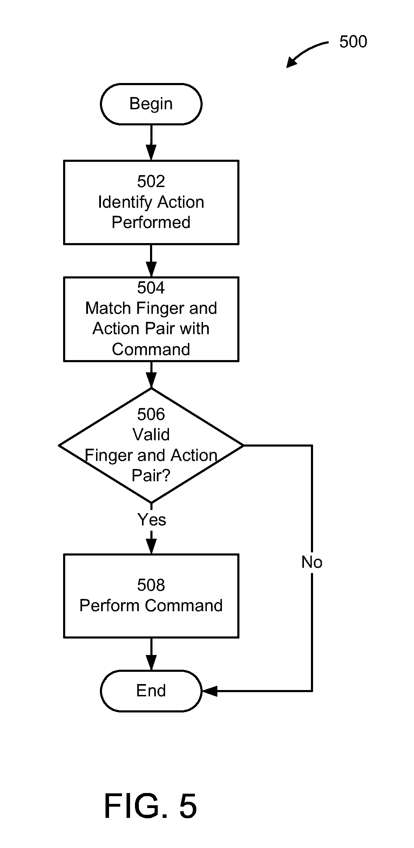

In some embodiments, the gesture recognition component 108 is configured to identify and/or perform a command based on the specific combination of fingers employed to perform the action on the touch screen 112 and the action. Particular examples of the processes performed by the gesture recognition component 108 are discussed further below with reference to the gesture recognition processes section in addition to FIGS. 4 and 5.

The gesture recognition component 108 may be implemented using hardware or a combination of hardware and software. For instance, in one example, the gesture recognition component 108 is implemented as a software component that is stored within the data storage 104 and executed by the processor 102. In this example, the instructions included in the gesture recognition component 108 program the processor 102 to identify and/or perform a command based on the specific combination of fingers employed to perform the action on the touch screen 112 and the action. In other examples, gesture recognition component 108 may be an application-specific integrated circuit (ASIC) that is coupled to the processor 102 and tailored to identify and/or perform a command based on the specific combination of fingers employed to perform the action on the touch screen 112 and the action. Thus, examples of the gesture recognition component 108 are not limited to a particular hardware or software implementation.

In some embodiments, the components disclosed herein, such as the gesture recognition component 108, may read parameters that affect the functions performed by the components. These parameters may be physically stored in any form of suitable memory including volatile memory, such as RAM, or nonvolatile memory, such as a flash memory or magnetic hard drive. In addition, the parameters may be logically stored in a propriety data structure, such as a database or file defined by a user mode application, or in a commonly shared data structure, such as an application registry that is defined by an operating system. In addition, some examples provide for both system and user interfaces, as may be implemented using the touch screen 112, that allow external entities to modify the parameters and thereby configure the behavior of the components.

The data storage 104 includes a computer readable and writeable nonvolatile data storage medium configured to store non-transitory instructions and data. In addition, the data storage 104 includes processor memory that stores data during operation of the processor 102. In some examples, the processor memory includes a relatively high performance, volatile, random access memory such as dynamic random access memory (DRAM), static memory (SRAM) or synchronous DRAM. However, the processor memory may include any device for storing data, such as a non-volatile memory, with sufficient throughput and storage capacity to support the functions described herein. According to several examples, the processor 102 causes data to be read from the nonvolatile data storage medium into the processor memory prior to processing the data. In these examples, the processor 102 copies the data from the processor memory to the non-volatile storage medium after processing is complete. A variety of components may manage data movement between the non-volatile storage medium and the processor memory and examples are not limited to particular data management components. Further, examples are not limited to a particular memory, memory system or data storage system.

The instructions stored on the data storage 104 may include executable programs or other code that can be executed by the processor 102. The instructions may be persistently stored as encoded signals, and the instructions may cause the processor 102 to perform the functions described herein. The data storage 104 also may include information that is recorded, on or in, the medium, and this information may be processed by the processor 102 during execution of instructions. The medium may, for example, be optical disk, magnetic disk or flash memory, among others, and may be permanently affixed to, or removable from, the touch screen device 100.

The gesture recognition component 108 may be stored in any logical construction capable of storing information on a computer readable medium including, among other structures, flat files, indexed files, hierarchical databases, relational databases or object oriented databases. These data structures may be specifically configured to conserve storage space or increase data exchange performance. In addition, various examples organize the gesture recognition component 108 into particularized and, in some cases, unique structures to perform the functions disclosed herein. In these examples, the data structures are sized and arranged to store values for particular types of data, such as integers, floating point numbers, character strings, arrays, linked lists, and the like.

As shown in FIG. 1, the touch screen device 100 includes an optional communication network interface 106. The optional communication network interface component 106 may include hardware components, software components or a combination of both. According to various examples, the hardware and/or software components of the optional network interface 106 couple the processor 102 to a computer network via a networking device, such as a bridge, router or hub. The optional network interface 106 may support a variety of standards and protocols, examples of which include USB, TCP/IP, Ethernet, Wireless Ethernet, BLUETOOTH, ZigBee, M-Bus, CAN-bus, IP, IPV6, UDP, DTN, HTTP, FTP, SNMP, CDMA, NMEA and GSM. To ensure data transfer is secure, in some examples, the touch screen device 100 can transmit data via the optional network interface 106 using a variety of security measures including, for example, TLS, SSL or VPN. In other examples, the optional network interface 106 includes both a physical interface configured for wireless communication and a physical interface configured for wired communication. According to various embodiments, the optional network interface 106 enables communication between the touch screen 100 and a variety of personal electronic devices including computer enabled glasses and earpieces.

The touch screen device 100, as shown in FIG. 1 includes a touch screen 112. The touch screen 112 receives input from a user and generates gesture information based on the input from the user. The touch screen 112 may identify one or more contact points 114 where a finger of the user comes in contact with the touch screen 112. The location, movement, and/or duration of the contact point 114 may be provided to, for example, the gesture recognition component 108 as part of the gesture information. In some embodiments, the touch screen 112 scans the contact point 114 to read a fingerprint of the user interacting with the touch screen 112 and further includes the fingerprint in the gesture information. In one example, the touch screen 112 detects fingerprints by projecting infrared light from the back side of the touch screen and analyzing the infrared light reflected from a subject's finger on the front side of the touch screen. The reflected light may be received by a light sensor (e.g., a camera) on the back side of the touch screen. A suitable device to employ as touch screen 112 includes, for example, the Fiberio touch screen developed by Hasso Plattner Institute in Potsdam, Germany.

### Gesture Recognition System

Some embodiments disclosed herein implement a gesture recognition system using one or more computer systems, such as touch screen device 100 described above with reference to FIG 1. FIG. 2 illustrates an example gesture recognition system 200. As shown in FIG. 2, the gesture recognition system 200 includes gesture recognition component 108 and data storage 104. The data storage 104 includes a command database 212, an action database 214, and a finger identification (ID) database 216. The data storage 104 is coupled to the gesture recognition component 108 via a network element 210. The gesture recognition component 108 receives gesture information 202 and optionally outputs command information 218. The gesture recognition component 108 includes a gesture processor 208 and an interface component 204 optionally including a user interface 206 to receive input from a user 220.

The gesture recognition system 200 receives gesture information from, for example, the touch screen 112 in FIG. 1. The gesture information 202 may include, for example, the location of the contact point(s), such as contact point 114, in addition to the duration of the contact and/or any movements of the contact point(s). The gesture information 202 may also include fingerprint information of the fingers that were employed to perform the gesture on the touch screen. The fingerprint received in the gesture information 202 is not limited to an image of a fingertip on the touch screen. The fingerprint received in the gesture information 202 may be, for example, the location of key features on the finger and/or information characterizing the fingerprint pattern (e.g., an arch pattern, a loop pattern, and a whorl pattern).

The data storage 104 stores information to facilitate the identification of specific gestures by the gesture recognition component 108. In some embodiments, the finger ID database 216 stores information identifying key features associated with the fingerprints of registered users. For example, the key features stored may be representative of the location of particular features in the finger and/or the fingerprint pattern (e.g., an arch pattern, a loop pattern, and a whorl pattern). The finger identification information in the finger ID database may be received and stored during a finger registration process. The finger registration process may include instructing a user to place a finger on the touch screen and scanning the touch screen to capture the finger identification information. The action database 214 stores action identifying information a plurality of recognized actions. In one example, the action identifying information may include a particular contact point location, movement, and/or duration pattern associated with an action. The pattern may include, for example, a right swipe action characterized by a contact point moving in a rightward direction across the screen. The command database 212 stores relationships between the finger and action and a particular command.

In some embodiments, the gesture recognition component 108 employs the gesture information 202 to identify a command based on the specific fingers employed in the gesture and the action performed in the gesture. For example, the gesture recognition component 108 receives gesture information via interface 204. The gesture processor 208 may match a received fingerprint from the gesture information 202 with a fingerprint stored in the finger ID database 216. The gesture processor 208 may proceed to match the information indicative of the specific action performed by the user to a set of recognized actions in the action database 214. The gesture processor 208 may further identify a command associated with the identified finger and action pair by matching the identified finger and action pair with a recognized finger and action pair stored in the command database 212. The gesture processor 208 may perform the command identified in the command database 212 or optionally generate command information 218. The command information 218 may instruct a separate software application or a particular hardware element to perform an action. In one example, the command associated with a finger and action pair captures a voice recording and identify the phrases stated in the voice recording. In this example, the gesture recognition component may generate command information to instruct a recording device to capture the voice recording.

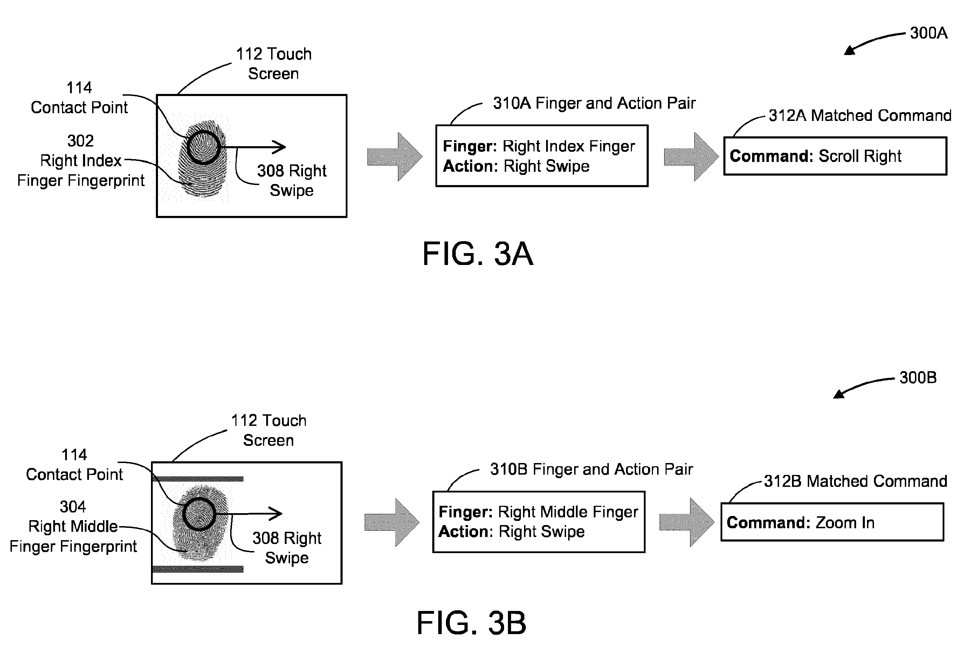

FIGS. 3A-3C illustrate various user interactions with the touch screen and the associated commands determined, for example, by the gesture recognition component 108. Referring to FIG. 3A, a diagram 300A is illustrated showing the received input on the touch screen 112 and the resulting finger and action pair 310A in addition to the matched command 312A. The touch screen 112 receives an input from the right index finger illustrated by the right index finger fingerprint 302 at the contact point 114 in a right swipe 308 motion. The gesture processing component 108 receives the gesture information from the touch screen 112 and matches the received fingerprint to the right index finger and matches the motion of the contact point 114 to the right swipe action to form the finger and action pair 310A. The gesture recognition component 108 further matches the finger and action pair 310A to the scroll right command as illustrated by matched command 312A.

FIG. 3B illustrates another diagram 300B illustrating the matched command 312B associated with a different set of user interactions on the touch screen 112. Relative to diagram 300A, the right middle finger is employed in the right swipe motion 308 rather than the right index finger. Accordingly, the gesture recognition component matches the right middle finger based on the right middle finger fingerprint 304 and determines the associated finger and action pair 310B. The finger and action pair 310B is then matched to a different command, i.e., the zoom in command, illustrated by matched command 312B.

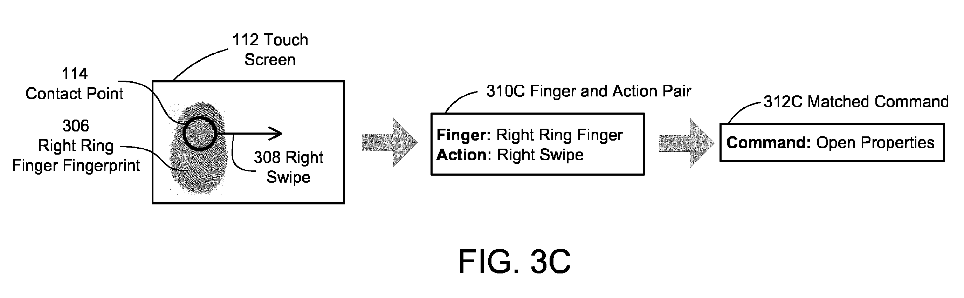

FIG. 3C illustrates another diagram 300C illustrating the matched command 312B associated with a different set of user interactions on the touch screen 112. Relative to diagrams 300A and 300B, the right ring finger is employed in the right swipe motion 308 rather than the right index finger or the right middle finger. Accordingly, the gesture recognition component matches the right ring finger based on the right ring finger fingerprint 306 and determines the associated finger and action pair 310C. The finger and action pair 310C is then matched to a different command, i.e., the open properties command, illustrated by matched command 312B.

### Gesture Recognition Processes

As described above with reference to FIG. 2, several embodiments perform processes to recognize gestures. In some embodiments, these gesture recognition processes are executed by a gesture recognition system, such as the gesture recognition system 200 described above with reference to FIG.2. One example of such a gesture recognition process is illustrated in FIG. 4. According to this example, the gesture recognition process 400 includes acts of receiving gesture information 402, identifying at least one finger 404, optionally determining authorization 406, and identifying and executing a command 408.

In the act 402, the gesture recognition system receives gesture information from, for example, a touch screen. The gesture information may include action information indicative of the specific action performed on the touch screen. For example, the action information may indicate the location of various contact points on the touch screen in addition to the movement and duration of the contact points. The gesture information may further include finger identification information. For example, the finger identification may include a fingerprint of the fingers, or any portion thereof, that were employed in the action on the touch screen.

In the act 404, the gesture recognition system identifies the finger, or fingers, employed to make the particular gesture on the touch screen. In one embodiment, the gesture recognition system identifies key features in the fingerprint in the received finger identification information. In this embodiment, the key features are compared with one or more stored sets of key features, for example stored in finger ID database 216, to find a match. The gesture recognition system may make an assumption if the finger identification information does not match any known finger. For example, the gesture recognition system may assume that an index finger was employed to make the gesture and thereby still enable unregistered users to interact with the touch screen in a limited fashion.

In the optional act 406, the gesture recognition system determines whether the finger employed to make the gesture is authorized to make the gesture. In one embodiment, the system determines whether there was a successful match between the received finger identification information and a fingerprint of a registered user. If the system matched the received finger identification information and a known fingerprint of a registered user, the system proceeds to act 408 and identifies and executes the command. Otherwise, the gesture recognition system terminates the process and thereby disallows any unregistered users from interacting with the touch screen. The gesture recognition system may also store access information associated with each finger of a registered user. In one example, the access information specifies that a particular user can only make gestures on the touch screen with an index finger. In this example, the gesture recognition system may proceed to act 408 if the particular user performs a gesture with an index finger and end the process if any other finger is employed.

In the act 408, the gesture recognition system identifies and executes a command associated with the gesture performed on the touch screen. Actions performed by the gesture recognition system during execution of an example command identification and execution process are described further below with reference to FIG. 5.

FIG. 5 illustrates an example command identification and execution process 500 according to various embodiments. The command identification and execution process 500 includes the acts of identifying an action performed 502, matching finger and action pair with a command 504, determining whether the finger and action pair is valid 506, and performing the command 508.

In act 502, the gesture recognition system identifies the action performed based on the received action information from the touch screen. As described above, the action information may include the location, duration, and movement of contact points on the touch screen. In these embodiments, the gesture recognition matches the location, duration, and movement to identify a specific action. In one example, the gesture recognition system may receive information indicating a single contact point on the screen that moved rightward. In this example, the gesture recognition system may identify a right swipe action.

In act 504, the gesture recognition system matches the finger and action pair to a command. The gesture recognition system may match the finger and action pair by comparing the determined finger and action pair with a plurality of recognized finger and action pairs stored in the memory.

In act 506, the gesture recognition system determines whether the finger and action pair is valid. The gesture recognition system may determine whether the finger and action pair is valid by determining whether there is a matching finger and action pair stored in memory. If the gesture recognition system determines that the finger and action pair is valid, the gesture recognition system proceeds to act 508 and performs the associated command. Otherwise, the gesture recognition system ends command identification and execution process 500.

In act 508, the gesture recognition system performs the command associated with the identified finger and action pair. The commands may include, for example, scrolling right, scrolling left, scrolling down, scrolling up, zooming in, zooming out, and opening properties. The gesture recognition system may provide command information to other components of a touch screen device to perform the command. In one example, the command associated with a finger and action pair captures a voice recording and identify the phrases stated in the voice recording. In this example, the gesture recognition component may generate command information to instruct a recording device to capture the voice recording.

Processes 400 and 500 each depict one particular sequence of acts in a particular embodiment. The acts included in these processes may be performed by, or using, one or more computer systems specially configured as discussed herein. Some acts are optional and, as such, may be omitted in accord with one or more embodiments. Additionally, the order of the acts can be altered, or other acts can be added, without departing from the scope of the embodiments described herein. Furthermore, as described above, in at least one embodiment, the acts are performed on particular, specially configured machines, namely a gesture recognition system configured according to the examples and embodiments disclosed herein.

### Example User Interface with Gesture Reconigtion

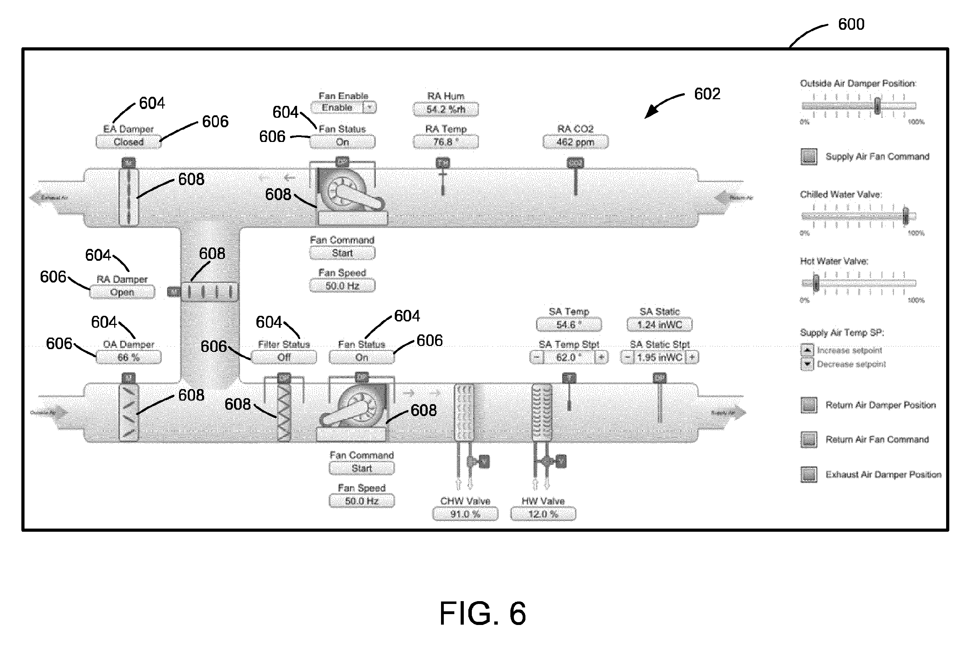

FIG. 6 illustrates an example user interface 600 with gesture recognition consistent with various embodiments disclosed herein. The user interface 600 includes a control panel 602 for a heating, ventilating, and air conditioning (HVAC) system. The control panel 602 includes a plurality of control element labels 604, control elements 606, and pictorial representations 608 of a state of the control elements 606.

In various embodiments, the control panel 602 presents a plurality of HVAC component information and control elements to, for example, an HVAC technician on a single screen. The control panel 602 controls the state of a plurality of HVAC components including for example exhaust air (EA) dampers, return air (RA) dampers, outside air (OA) dampers, filters, chilled water (CHW) valves, and hot water (HW) valves. The control panel 602 also displays information from various instruments including RA temperature, RA humidity, RA carbon dioxide (CO2) concentration, supply air (SA) temperature, and SA static pressure.

In one embodiment, user interaction with each control element 606 in the control panel 602 may trigger the gesture recognition system to perform one of three distinct commands. For example, the three distinct commands may include a select command associated with an index finger tap action, a voice recognition editor command associated with a middle finger tap action, and a save command associated with a ring finger tap action. In this embodiment, the gesture recognition system may detect an index finger tap on the EA damper control element and select the control element. The gesture recognition system may further detect a middle finger tap on the EA damper control element and send instructions (e.g., command information) to the touch screen device to record audio, detect a phrase, and display the detected phrase in the control element. The gesture recognition system may further detect a ring finger tap on the EA damper control element and save the detected and displayed phrase as the new state of the control element. It is appreciated that the commands described in this embodiment may be readily applied to other control panel displays. For example, the commands described also may be employed in a spreadsheet including a similar plurality of control elements 606 and their associated labels 604.

The user interface 600 illustrating an example control panel 602 for an HVAC system is only one particular application of the gesture recognition system. The gesture recognition system may be similarly applied to control panels for other systems including, for example, information data centers, power distribution systems, healthcare systems, hotel management systems, and others.

In addition, the gesture recognition system may be applied to touch screen systems apart from system control panels. In one embodiment, the gesture recognition system is implemented with touch screen keyboards to facilitate the entry of information into the touch screen device. In this embodiment, the touch screen device presents a chorded keyboard (e.g., a stenotype machine keyboard) with a reduced number of keys where words are spelled phonetically in a single action (e.g., by taping multiple keys at once). The chorded keyboard divides the letters into a plurality of groups where each group of letters is associated with one or more fingers. For example, 7 consonants may be associated with the left hand to start a sound, 4 vowels may be associated with the left and right thumb, and 10 consonants may be associated with the right hand to end the sound. The gesture recognition system determines which key, or combination of keys, was pressed based on the particular finger that was employed and the location of the tap on the touch screen. The chorded keyboard advantageously improves typing speed and accuracy on touch screen device with limited screen space.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope of the examples discussed herein. Accordingly, the foregoing description and drawings are by way of example only.

## Claims

1. A gesture recognition system comprising:
a memory storing finger identification information identifying a plurality of fingers of at least one user and command information associating a command with at least one finger and action pair;
at least one processor coupled to the memory; and
a gesture recognition component executable by the at least one processor and configured to:
receive gesture information from a touch screen including at least one fingerprint and action information;
identify at least one finger of the plurality of fingers of the at least one user based on the at least one fingerprint and the finger identification information;
identify an action performed based on the action information;
match the action and the at least one finger with the at least one finger and action pair stored in the memory; and
perform the command associated with the at least one finger and action pair.

2. The system of claim 1, wherein the gesture recognition component is further configured to uniquely identify the at least one finger by uniquely identifying at least one of a right index finger, a right middle finger, a right ring finger, a right little finger, a left index finger, a left middle finger, a left ring finger, and a left little finger of the at least one user.

3. The system of claim 1, wherein the finger identification information includes a plurality of key features associated with each finger of the plurality of fingers and wherein the gesture recognition component is further configured to extract key features from the at least one fingerprint and match the extracted key features to the stored key features associated with each finger of the plurality of fingers.

4. The system of claim 1, wherein the action includes at least one of a directional swipe action, a tap action, and a press and hold action.

5. The system of claim 1, wherein the action information includes a location of one or more contact points on the touch screen and information related to movement of the at least one finger.

6. The system of claim 5, wherein the memory stores action identification information identifying a plurality of actions and wherein the gesture recognition component is further configured to identify the action performed at least in part by matching the location and the information related to movement with action identification information stored in the memory.

7. The system of claim 1, wherein the gesture processing component is further configured to present, via the touch screen, a display to the at least one user including a control panel having a plurality of control elements.

8. The system of claim 7, wherein each control element of the plurality of control elements is associated with at least two commands, each of the at least two commands being associated with a unique finger and action pair.

9. The system of claim 8, wherein the at least two commands includes a first command to change a state of the respective control element and a second command to save the state of the respective control element.

10. The system of claim 9, wherein the first command is associated with an index finger and a tap action and the second command is associated with a middle finger and a tap action.

11. A method of recognizing gestures comprising:
storing, via a memory coupled to at least one processor, finger identification information identifying a plurality of fingers of at least one user and command information associating a command with at least one finger and action pair;
receiving, by a gesture recognition component executable by the at least one processor, gesture information including at least one fingerprint and action information;
identifying, by the gesture recognition component, at least one finger of the plurality of fingers of the at least one user based on the at least one fingerprint and the finger identification information;
identifying, by the gesture recognition component, an action performed based on the action information;
matching, by the gesture recognition component, the action and the at least one finger with the at least one finger and action pair stored in the memory; and
performing, by the gesture recognition component, the command associated with the at least one finger and action pair.

12. The method of claim 11, wherein identifying the at least one finger includes identifying at least one of a right index finger, a right middle finger, and a right ring finger, and a right little finger of the at least one user.

13. The method of claim 11, wherein storing the finger identification information includes storing a plurality of key features associated with each finger of the plurality of fingers and wherein uniquely identifying the at least one finger includes extracting key features from the at least one fingerprint and matching the extracted key features to the stored key features associated with each finger of the plurality of fingers.

14. The method of claim 11, wherein receiving the action information includes receiving a location of one or more contact points on the touch screen and information related to movement of that at least one finger.

15. The method of claim 14, further comprising storing action identification information identifying a plurality of actions and wherein identifying the action performed includes matching the location and the information related to movement with the action identification information.
